(19) **Europäisches Patentamt**
**European Patent Office**
**Office européen des brevets**

(11) **EP 1 345 108 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(51) Int Cl.:
***G06F 1/28*** *(2006.01)*

(21) Anmeldenummer: **03003751.9**

(22) Anmeldetag: **19.02.2003**

(54) **Elektrisches Gerät mit einem Betriebs- und einem Unterbrechungszustand sowie Verfahren zum Erkennen des Unterbrechungszustandes**

Electrical apparatus with an operational state and an interrupted state, and method for detecting an interruption state

Appareil électrique avec un état de fonctionnement et un état d'interruption, et procédé de détection d'un état d'interruption

(84) Benannte Vertragsstaaten:
**AT BE BG CH CY CZ DE DK EE ES FI FR GB GR HU IE IT LI LU MC NL PT SE SI SK TR**

(30) Priorität: **19.02.2002 DE 10206340**

(43) Veröffentlichungstag der Anmeldung:
**17.09.2003 Patentblatt 2003/38**

(73) Patentinhaber: **SIEMENS AKTIENGESELLSCHAFT**
**80333 München (DE)**

(72) Erfinder:
• **Göbel, Alfons**
**91058 Erlangen (DE)**
• **Haller, Georg**
**91058 Erlangen (DE)**
• **Walter, Markus**
**96050 Bamberg (DE)**

(56) Entgegenhaltungen:
**US-A- 5 113 504    US-A- 5 316 263**
**US-B1- 6 307 480**

## Beschreibung

Die Erfindung betrifft ein elektrisches Gerät gemäß dem Oberbegriff des Anspruchs 1 mit einem Betriebs- und einem Unterbrechungszustand sowie ein Verfahren zum Betrieb des Gerätes, das ein Erkennen des Unterbrechungszustandes ermöglicht. Das elektrische Gerät hat zumindest zwei unterscheidbare Zustände, den Betriebszustand und den Unterbrechungszustand. Ferner weist es einen durch eine erste Zählfrequenz beaufschlagbaren ersten Zähler und einen durch eine zweite Zählfrequenz beaufschlagbaren zweiten Zähler sowie eine Einrichtung zur Gleichlauferkennung der beiden Zähler auf. Während des Betriebszustandes sind beide Zähler durch die jeweilige Zählfrequenz beaufschlagt.

Bei einem bekannten elektrischen Gerät der oben genannten Art werden der erste und der zweite Zähler von einer jeweils gleichen Zählfrequenz beaufschlagt. Zur sicheren Erkennung des Unterbrechungszustandes ist daneben ein unabhängiger, dritter Zähler vorgesehen, dessen Betrieb auch bei einem Ausfall der Netzspannung durch eine Batteriepufferung sichergestellt ist. Durch den dritten Zähler werden z. B. äquidistante Messstellen zur Ermittlung des jeweiligen Standes der beiden Zähler vorgegeben. Durch eine Untersuchung einer Relation der jeweiligen Zählerstände zueinander oder zu einem vorangehenden Zählerstand können Änderungen im Gleichlauf der Zähler und daran der Unterbrechungszustand erkannt werden.

Nachteilig bei diesem bekannten elektrischen Gerät ist jedoch, dass drei Zähler zur Erkennung des Unterbrechungszustandes benötigt werden, wobei der Betrieb des dritten Zählers auch bei Netzausfall durch eine aufwendige Batteriepufferung sichergestellt werden muss.

Ein elektrisches Gerät gemäß dem Oberbegriff des Anspruchs 1 ist aus der GB 2 131 206 A bekannt.

Der Erfindung liegt daher die Aufgabe zugrunde, ein einfaches und kostengünstiges elektrisches Gerät mit einem Betriebs- und einem Unterbrechungszustand, bei dem der Unterbrechungszustand erkennbar ist, sowie ein zur Erkennung des Unterbrechungszustandes bei dem elektrischen Gerät geeignetes Verfahren anzugeben.

Diese Aufgabe wird erfindungsgemäß durch ein elektrisches Gerät mit den Merkmalen des Anspruchs 1 gelöst. Dazu ist bei einem gattungsgemäßen elektrischen Gerät mit einem Betriebszustand und einem Unterbrechungszustand, einem durch eine erste Zählfrequenz beaufschlagbaren ersten Zähler und einem durch eine zweite Zählfrequenz beaufschlagbaren zweiten Zähler und einer Einrichtung zur Gleichlauferkennung der beiden Zähler, wobei beide Zähler während des Betriebszustandes durch die jeweilige Zählfrequenz beaufschlagt sind, vorgesehen, dass der Eintritt des Unterbrechungszustandes das Rücksetzen zumindest eines der beiden Zähler auf einen vorgegebenen oder vorgebbaren Initialwert, z. B. Null, bewirkt.

Das elektrische Gerät ist z. B. eine Zentraleinheit einer speicherprogrammierbaren Steuerung. Eine solche Zentraleinheit steuert oder überwacht nach Maßgabe eines Anwenderprogramms einen technischen Prozess. Die Zentraleinheit hat zumindest zwei unterscheidbare Zustände, den Betriebszustand und den Unterbrechungszustand. In einem ersten Zustand, dem Betriebszustand, führt die Zentraleinheit das Anwenderprogramm aus. Dieser erste Zustand wird kurz mit "RUN" bezeichnet. In einem zweiten Zustand, dem Unterbrechungszustand, wird das elektrische Gerät nicht oder nicht ausreichend mit elektrischer Energie versorgt. Der beabsichtigte oder unvorhergesehene Ausfall der Energieversorgung, insbesondere der Spannungsversorgung, ist ein Unterbrechungszustand, der sicher erkannt werden soll. Dieser Zustand wird kurz mit "Netz-Aus" bezeichnet.

Die Erfindung geht von der Erkenntnis aus, dass zu einer gemäß IEC61508 sicherheitsgerichteten Erkennung des oder jedes Unterbrechungszustandes unterschiedliche Ansätze zur Erkennung des Unterbrechungszustandes erforderlich sind. Ein erster Ansatz besteht darin, beim Eintritt des Unterbrechungszustandes eine diesbezügliche Information zu hinterlegen, z. B. einen Merker zu setzen. Bei einem späteren Wechsel in den Betriebszustand können dieser Merker abgefragt und in Abhängigkeit vom Wert des Merkers bestimmte zusätzliche Aktionen, z. B. ein Neustart des Anwenderprogramms mit definierten vorgegebenen oder vorgebbaren Werten, veranlasst werden. Wenn der Merker fehlerhaft beim Eintritt des Unterbrechungszustandes nicht gesetzt wurde oder aus anderen Gründen anhand des Wertes des Merkers nicht erkennbar ist, dass das Gerät zumindest kurzfristig den Unterbrechungszustand angenommen hat, kann das Anwenderprogramm mit nicht definierten Werten zur Ausführung gelangen. Dies macht die weitere Ausführung des Anwenderprogramms unsicher und gegebenenfalls sogar gefährlich. Daher soll der Unterbrechungszustand nach mindestens einem weiteren, unterschiedlichen Ansatz erkennbar sein. Dieser weitere Ansatz basiert auf der Verwendung von Zählern.

Der Vorteil der Erfindung besteht darin, dass der bekannte Einsatz von Zählern effizienter und kostengünstiger wird.

Nachdem im Betriebszustand beide Zähler durch ihre jeweilige Zählfrequenz beaufschlagt sind, ist während dieses Zustands ein Gleichlauf der Zähler gegeben. Mit der Gleichlauferkennung ist dies ermittelbar. Nach dem Unterbrechungszustand ist der Gleichlauf der beiden Zähler im Vergleich zur Situation vor dem Unterbrechungszustand gestört.

Durch den Eintritt des Unterbrechungszustandes wird das Rücksetzen zumindest eines der beiden Zähler auf einen vorgegebenen oder vorgebbaren Initialwert bewirkt. Unabhängig davon, ob während des Unterbrechungszustandes kein, ein oder beide Zähler weiterlaufen, wird durch das Rücksetzen zumindest eines Zählers dessen Lauf so beeinflusst, dass kein Gleichlauf mehr gegeben ist. Daran ist der Unterbrechungszustand wieder erkennbar.

Bevorzugte Ausführungsformen des elektrischen Gerätes sind Gegenstand der auf Anspruch 1 rückbezogenen Unteransprüche.

Wenn bei dem elektrischen Gerät die Einrichtung zur Gleichlauferkennung Mittel zur sukzessiven Ermittlung des jeweiligen Standes der beiden Zähler und zum Vergleich einer ersten Differenz zwischen einem aktuellen und einem vorangehenden Stand des ersten Zählers und einer zweiten Differenz zwischen einem aktuellen und einem vorangehenden Stand des zweiten Zählers umfasst, ist eine effiziente Möglichkeit zur Feststellung des Gleichlaufs der beiden Zähler gegeben. Die erste Differenz stellt eine zur Ordinate eines Koordinatensystems parallele Seite eines rechtwinkligen Steigungsdreiecks unter dem zeitlichen Verlauf des Standes des ersten Zählers dar. Die zweite Differenz stellt entsprechend die zur Ordinate parallele Seite eines weiteren rechtwinkligen Steigungsdreiecks unter dem Verlauf des Standes des zweiten Zählers dar. Die Länge der Seite des jeweiligen Steigungsdreiecks ist ein Maß für die Steigung des Verlaufes des jeweiligen Zählers zwischen den beiden Messungen und den damit festgelegten Stützpunkten. Diese Möglichkeit zur Feststellung des Gleichlaufes der beiden Zähler wird daher entsprechend als Steigungsuntersuchung bezeichnet. Der Verlauf des Wertes eines Zählers wird im Folgenden kurz als Graph des Zählers bezeichnet.

Wenn bei dem elektrischen Gerät die Einrichtung zur Gleichlauferkennung Mittel zur sukzessiven Ermittlung einer Differenz zwischen einem Stand des ersten Zählers und einem Stand des zweiten Zählers und Mittel zum Vergleich einer aktuellen Differenz und einer vorangehenden Differenz umfasst, ist eine alternative effiziente Möglichkeit zur Feststellung des Gleichlaufs der beiden Zähler gegeben. Diese Möglichkeit zur Feststellung des Gleichlaufes der beiden Zähler wird als Abstandsuntersuchung bezeichnet.

Wenn bei dem elektrischen Gerät die beiden Zähler durch eine identische erste und zweite Zählfrequenz beaufschlagt sind, ergibt sich für den zeitlichen Verlauf des jeweiligen Standes der beiden Zähler über einer Zeitachse jeweils eine übereinstimmende Steigung.

Auch wenn das elektrische Gerät Mittel zur Ableitung eines ersten und zweiten Zeitwertes aus dem jeweiligen Stand des ersten und zweiten Zählers aufweist, lässt sich die Bestimmung des Zeitwertes so gestalten, dass - zumindest während des Betriebszustandes - der Verlauf der beiden Zeitwerte über einer Zeitachse jeweils eine übereinstimmende Steigung aufweist.

Die übereinstimmende Steigung macht die Erkennung des Gleichlaufs der beiden Zähler besonders einfach. Der Vergleich der ersten Differenz und der zweiten Differenz oder der aktuellen Differenz und der vorangehenden Differenz ist dann direkt ohne vorhergehende Anpassung oder Normierung möglich.

Gemäß einer vorteilhaften Ausgestaltung bewirkt der Eintritt des Unterbrechungszustandes das Rücksetzen beider Zähler auf einen jeweils vorgegebenen oder vorgebbaren Initialwert, insbesondere Null. Dies macht die Erkennung einer Unterbrechung durch Spannungs- oder Netzausfall besonders einfach, weil der Spannungsausfall bei üblichen Zählern ohnehin einen Verlust des den aktuellen Zählerstand repräsentierenden jeweiligen Registerinhaltes nach sich zieht. Da das Rücksetzen beider Zähler durch den Spannungsausfall selbst bewirkt wird, brauchen auch keine Mittel zum aktiven Rücksetzen der Zähler vorgesehen werden.

Gemäß einer weiteren vorteilhaften Ausgestaltung sind die Überlaufwerte beider Zähler unterschiedlich. Der Überlaufwert eines Zählers ist ein charakteristischer Parameter des jeweiligen Zählers. Bei Erreichen des Überlaufwertes beginnt der Zähler ausgehend von einem Initialwert, insbesondere Null, neu zu zählen. Unterschiedliche Überlaufwerte beider Zähler machen den Unterbrechungszustand auch bei Ausnahmekonstellationen erkennbar.

Mit einem gemäß Anspruch 7 ausgebildeten elektrischen Gerät ist ein weiterer Unterbrechungszustand, im Folgenden kurz mit "Stop" bezeichnet, erkennbar. Der weitere Unterbrechungszustand "Stop" zeichnet sich dadurch aus, dass bei bestehender Energieversorgung des elektrischen Gerätes die Abarbeitung des Anwenderprogramms z. B. aufgrund eines Programmfehlers oder eines manuellen Eingriffs unterbrochen ist. Auch im Anschluss an diesen weiteren Unterbrechungszustand ist ein Neustart des Anwenderprogramms mit definierten Werten erforderlich. Um dies gewährleisten zu können, muss auch der weitere Unterbrechungszustand sicher erkannt werden.

Bezüglich des Verfahrens wird die genannte Aufgabe erfindungsgemäß gelöst durch die Merkmale der Ansprüche 8 oder 9. Danach ist gemäß Anspruch 8 ein Verfahren zum Betrieb des oben genannten elektrischen Gerätes vorgesehen, bei dem sukzessive der jeweilige Stand der beiden Zähler ermittelt wird, wobei eine erste Differenz aus einem aktuellen und einem vorangehenden Stand des ersten Zählers sowie eine zweite Differenz aus einem aktuellen und einem vorangehenden Stand des zweiten Zählers gebildet wird und wobei die erste Differenz, ein erstes Steigungsmaß, mit der zweiten Differenz, einem zweiten Steigungsmaß, verglichen wird.

Alternativ ist gemäß Anspruch 9 ein Verfahren zum Betrieb des oben genannten elektrischen Gerätes vorgesehen, bei dem sukzessive anhand des jeweiligen Standes der beiden Zähler eine Differenz zwischen dem Stand des ersten Zählers und dem Stand des zweiten Zählers ermittelt wird und wobei eine aktuelle Differenz, ein aktueller Abstand, mit einer vorangehenden Differenz, einem vorangehenden Abstand, verglichen wird.

Eine zweckmäßige Weiterbildung des Verfahrens ist Gegenstand des auf Anspruch 8 oder 9 rückbezogenen Unteranspruchs.

Nachfolgend wird ein Ausführungsbeispiel der Erfindung anhand der Zeichnung näher erläutert. Einander entsprechende Gegenstände oder Elemente sind in allen Figuren mit den gleichen Bezugzeichen versehen.

Darin zeigen:

FIG 1       ein elektrisches Gerät mit zwei Zählern,

FIG 2       den Stand der beiden Zähler über einer Zeitachse aufgetragen,

FIG 3a, 3b     einen weiteren Verlauf des jeweiligen Standes der beiden Zähler über der Zeitachse,

FIG 4a - 4d    die Beeinflussung des zeitlichen Verlaufs beider Zähler durch den Unterbrechungszustand und

FIG 5       die Beeinflussung des zeitlichen Verlaufs beider Zähler durch den Unterbrechungszustand und den weiteren Unterbrechungszustand.

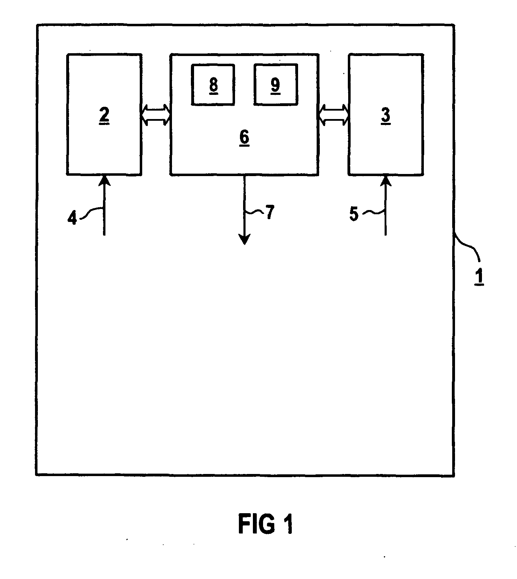

FIG 1 zeigt schematisiert als elektrisches Gerät 1 eine Zentraleinheit 1 einer speicherprogrammierbaren Steuerung mit einem ersten und einem zweiten Zähler 2, 3, die jeweils durch eine erste und zweite Zählfrequenz 4, 5 beaufschlagt sind. Ferner ist eine Einrichtung 6 zur Gleichlauferkennung der beiden Zähler 2, 3 vorgesehen. Die Einrichtung 6 zur Gleichlauferkennung wird im Folgenden kurz auch als Gleichlaufüberwachung 6 bezeichnet. Sie hat dazu Zugriff auf die beiden Zähler 2, 3 (angedeutet durch die Doppelpfeile) und kann über diesen Zugriff insbesondere den jeweiligen Zählerstand der beiden Zähler 2, 3 auslesen. Wird eine Abweichung im Gleichlauf der beiden Zähler 2, 3 erkannt, gibt die Gleichlaufüberwachung 6 ein diesbezügliches Signal 7 aus.

Die Zentraleinheit 1 steuert oder überwacht nach Maßgabe eines nicht dargestellten Anwenderprogramms einen gleichfalls nicht dargestellten technischen Prozess. Die Zentraleinheit 1 hat zumindest drei unterscheidbare Zustände, einen Betriebszustand, einen Unterbrechungszustand und einen weiteren Unterbrechungszustand. Im Betriebszustand "RUN" führt die Zentraleinheit das Anwenderprogramm aus. Im Unterbrechungszustand ist die Spannungsversorgung der Zentraleinheit 1 unterbrochen. Dieser Zustand wird entsprechend kurz als "Netz-Aus" bezeichnet. Im weiteren Unterbrechungszustand "Stop" ist die Ausführung des Anwenderprogramms unterbrochen. Bei Wiederkehr der Netzspannung befindet sich die Zentraleinheit 1 zumindest kurzfristig im Unterbrechungszustand "Stop", bis entweder automatisch oder durch Benutzereinwirkung ein Wechsel in den Betriebszustand "RUN" erfolgt.

Durch die Gleichlaufüberwachung 6 kann bei der Zentraleinheit 1 der Unterbrechungszustand "Netz-Aus" und auch der weitere Unterbrechungszustand "Stop" erkannt werden. Dazu ist zunächst vorgesehen, dass beide Zähler 2, 3 während des Betriebszustandes "RUN" durch die jeweilige Zählfrequenz 4, 5 beaufschlagt sind. Zur Erkennung und Überwachung des Gleichlaufs der beiden Zähler 2, 3 weist die Gleichlaufüberwachung 6 entsprechende Mittel 8, 9 auf.

Anhand der nachfolgenden Figuren wird die Überwachung des Gleichlaufs der beiden Zähler 2, 3 erläutert.

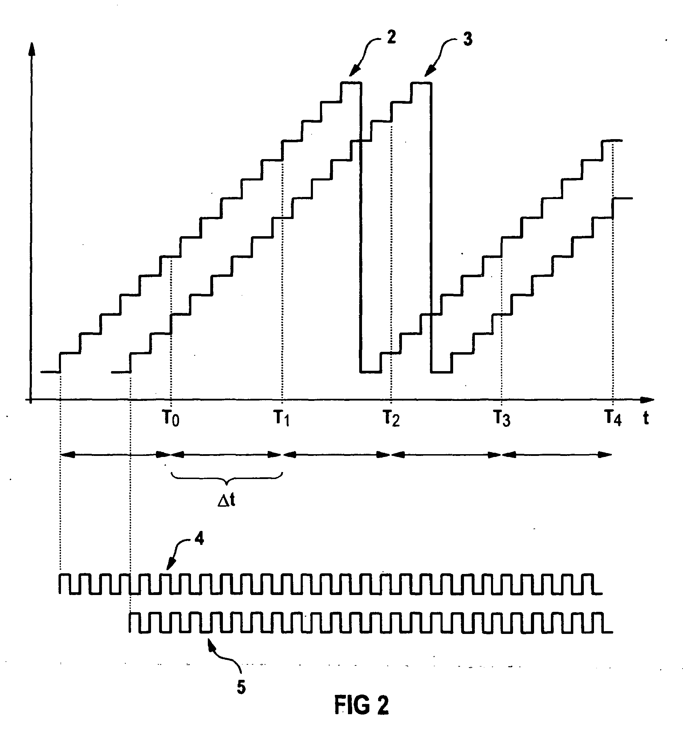

FIG 2 zeigt über einer Zeitachse t aufgetragen den Graph der beiden Zähler 2, 3. Da keiner der beiden Zähler 2, 3 in FIG 2 selbst dargestellt ist, werden in FIG 2 sowie sämtlichen nachfolgenden Figuren Zähler und Zählerstand jeweils mit dem gleichen Bezugszeichen versehen.

Jeder der beiden Zähler 2, 3 hat einen Maximal- oder Überlaufwert 2', 3' und einen Initialwert 2", 3". Jeder Zähler 2, 3 wird mit der jeweils zugeordneten Zählfrequenz 4, 5 beaufschlagt. Der erste Zähler 2 wird durch die erste Zählfrequenz 4 und der zweite Zähler 3 durch die zweite Zählfrequenz 5 beaufschlagt. Mit jedem Impuls der Zählfrequenz 4, 5 wird der Stand des jeweiligen Zählers 2, 3 erhöht (der Zähler "läuft"). Nach Erreichen des Überlaufwertes 2', 3' wird der Zählvorgang ausgehend vom Initialwert 2", 3", z. B. Null, fortgesetzt.

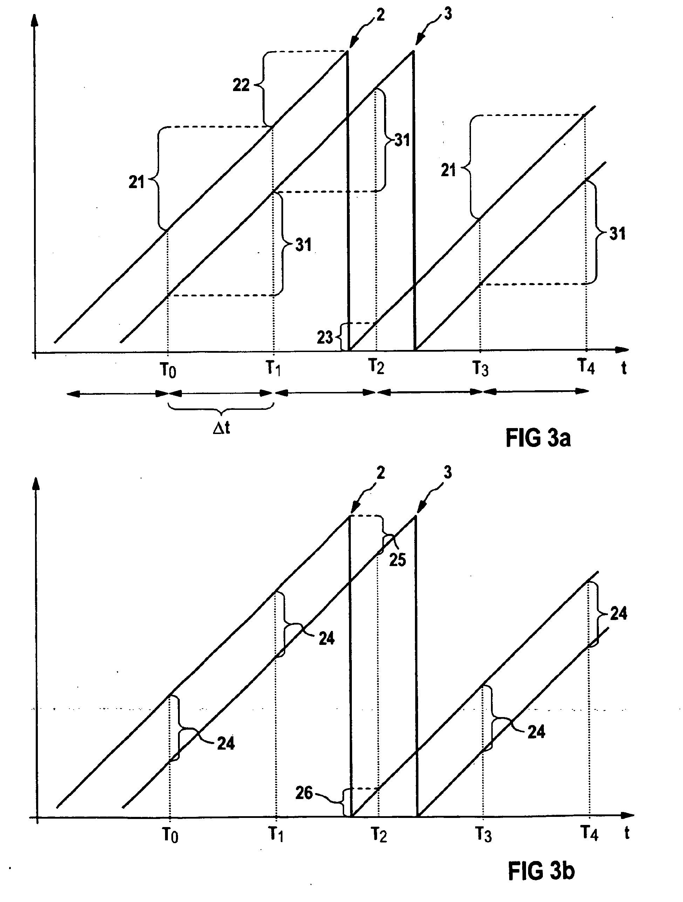

Zu bestimmten, nicht notwendig äquidistanten Messstellen $M_0$, $M_1$, $M_2$, $M_3$, $M_4$ wird durch die Gleichlaufüberwachung 6 (FIG 1) und die dafür vorgesehenen Mittel 8, 9 (FIG 1) eine bestimmte Differenz, entweder zur Steigungs- oder zur Abstandsuntersuchung, in Bezug auf die jeweiligen Stände der beiden Zähler 2, 3 gebildet und darauf ein geeigneter Vergleich durchgeführt. Dies wird für die Steigungsuntersuchung anhand von FIG 3a und für die Abstandsuntersuchung anhand von FIG 3b näher erläutert.

Bei der Steigungsuntersuchung sind die Mittel 8, 9 der Gleichlauferkennung 6 zur sukzessiven Ermittlung des jeweiligen Standes der beiden Zähler 2, 3 und sodann zum Vergleich einer ersten Differenz 21; 22, 23; 24 zwischen einem aktuellen und einem vorangehenden Stand des ersten Zählers 2 und einer zweiten Differenz 31, 32, 33 zwischen einem aktuellen und einem vorangehenden Stand des zweiten Zählers 3 vorgesehen.

Bei der Abstandsuntersuchung sind die Mittel 8, 9 zur sukzessiven Ermittlung einer Differenz 41; 42; 43, 44; 45 zwischen einem Stand des ersten Zählers 2 und einem Stand des zweiten Zählers 3 und sodann zum Vergleich einer aktuellen Differenz 42 und einer vorangehenden Differenz 41 vorgesehen.

Es ergibt sich, dass z. B. an der Messstelle $M_0$ die Differenz 21 zwischen dem aktuellen und dem vorangehenden Stand des ersten Zählers 2 der Differenz 31 zwischen dem aktuellen und dem vorangehenden Stand des zweiten Zählers 3 entspricht. Bei Gleichlauf beider Zähler 2, 3 ergibt sich diese Übereinstimmung der ermittelten Differenzen 21; 22, 23; 24 bzw. 31, 32, 33 für jede Messstelle $M_k$ (k = 0, 1, 2, 3 ...).

Die ermittelte Differenz 21, 24 bzw. 31, 32, 33 bildet im Übrigen jeweils eine Seite eines rechtwinkligen, nicht speziell dargestellten Steigungsdreiecks. Sie ist damit ein Maß für die Steigung des Graphen beider Zähler 2, 3 über der Abszisse des Koordinatensystems.

Wenn zwischen dem aktuellen und dem vorangehenden Stand eines Zählers 2, 3 ein Überlauf stattgefunden hat, wird die betreffende Differenz 22, 23 gebildet, indem eine erste Differenz 22 vom vorangehenden Stand des betreffenden Zählers 2 bis zu seinem Überlaufwert 2' (FIG 2) und eine zweite Differenz 23 vom Initialwert 2" (FIG 2) bis zum aktuellen Wert des Zählers 2 berücksichtigt wird. Dies wird im Folgenden als "Normierung auf den Überlaufwert des Zählers" bezeichnet.

Bei der Abstandsuntersuchung wird im Unterschied zur Steigungsuntersuchung eine Differenz 41; 42; 43, 44; 45 zwischen dem aktuellen Stand des ersten Zählers 2 und dem aktuellen Stand des zweiten Zählers 3 gebildet. Eine aktuelle Differenz 42, z. B. an der Messstelle $M_1$, wird mit einer vorangehenden Differenz 41, z. B. an der Meßstelle $M_0$, verglichen. Es ergibt sich, dass die aktuelle Differenz 42 mit der vorangehenden Differenz 41 übereinstimmt. Bei Gleichlauf beider Zähler 2, 3 ergibt sich diese Übereinstimmung der ermittelten Differenzen 41; 42; 43, 44; 45 für jede Messstelle $M_k$ (k = 0, 1, 2, 3 ...).

Wenn ein Überlauf eines der Zähler 2, 3 stattgefunden hat, wird die betreffende Differenz 43, 44 wieder unter Berücksichtigung des Überlaufwertes 2' des übergelaufenen Zählers 2, d. h. durch geeignete Normierung, gebildet.

Dass Steigungs- und Abstandsuntersuchung einander - zumindest unter bestimmten Randbedingungen für die jeweiligen Werte der Zähler - entsprechen und daher deren Betrachtung ein gleiches Ergebnis liefert, wird anhand einfacher Umformungen ersichtlich, wobei $S_k$ den Stand des ersten Zählers 2 und $F_k$ den Stand des zweiten Zählers 3 an einer Messstelle $M_k$ (k = 0, 1, 2, 3 ...) bezeichnet und die Beziehung [1] die Steigungsuntersuchung und die Beziehung [2] die Abstandsuntersuchung beschreibt:

$$F_{k+1} - F_k = S_{k+1} - S_k \qquad\qquad [1]$$
$$\Leftrightarrow \quad F_{k+1} - S_{k+1} = F_k - S_k \qquad \forall\ F_{k+1} > F_k,\ S_{k+1} > S_k \qquad [2]$$

Zur Überwachung des Gleichlaufes ist nicht notwendig erforderlich, dass die beiden jeweils betrachteten Differenzen exakt gleich sind. Tatsächlich reicht es aus, dass sich die beiden Differenzen nicht mehr als minimal ($\delta$; $\delta \geq 0$) unterscheiden. Dabei gibt die Beziehung [1.1] die Bedingung für die Steigungsuntersuchung und die Beziehung [2.1] die korrespondierende Bedingung für die Abstandsuntersuchung an:

$$[F_{k+1} - F_k] - [S_{k+1} - S_k] < \delta \qquad\qquad [1.1]$$
$$\Leftrightarrow \quad [F_{k+1} - S_{k+1}] - [F_k - S_k] < \delta \qquad \forall\ F_{k+1} > F_k,\ S_{k+1} > S_k \qquad [2.1]$$

Der Grenzwert $\delta$ ist vorgegeben oder vorgebbar.

Wenn die oben genannte Randbedingung - $F_{k+1} > F_k$, $S_{k+1} > S_k$ - nicht erfüllt ist, wenn also zwischen den Messstellen $M_{k+1}$ und $M_k$ einer der Zähler 2, 3 seinen jeweiligen Überlaufwert 2', 3' erreicht hat und der Zählvorgang danach ausgehend vom entsprechenden Initialwert 2", 3" fortgesetzt wird (Überlauf), ist eine Normierung der jeweiligen Differenz auf den Überlaufwert 2', 3' des Zählers 2, 3 erforderlich.

Dazu wird jede Differenz $[F_{k+1} - F_k]$, $[S_{k+1} - S_k]$ z. B. einer logischen UND-Verknüpfung mit dem Überlaufwert 2', 3' des jeweiligen Zählers 2, 3 unterzogen.

$$[F_{k+1} - F_k]\ \text{AND}\ F^{max} = [S_{k+1} - S_k]\ \text{AND}\ S^{max} \qquad [3]$$
$$\Leftrightarrow \quad F^{max} - F_{k+1} + F_k = S^{max} - S_{k+1} + S_k \qquad [4]$$

Dabei bezeichnet $F^{max}$ und $S^{max}$ den jeweiligen Überlaufwert 2', 3' des ersten bzw. zweiten Zählers 2, 3. Eine solche UND-Verknüpfung wird auch als Maskierung bezeichnet. Die Maskierung entspricht auch einer so genannten MODULO-Division durch den jeweiligen Überlaufwert 2', 3' der beiden Zähler 2, 3.

Bei der Gleichlaufüberwachung 6 handelt es sich z. B: um einen so genannten Mikrocontroller, der über einen nicht dargestellten Bus Zugriff auf beide Zähler 2, 3 hat. Der Mikrocontroller 6 umfasst die genannten Mittel 8, 9, und zwar insbesondere eine erste Vorrichtung 8 zum Auslesen des jeweiligen Standes der beiden Zähler 2, 3 und zum Zwischenspeichern der ausgelesenen Werte sowie eine zweite Vorrichtung 9, um die ausgelesenen Werte miteinander arithmetisch oder logisch zu verknüpfen. Der Mikrocontroller 6 oder eine funktionsäquivalente Verarbeitungsfunktionalität 6 kann auch zusammen mit den beiden Zählern 2, 3 in einem eigenen elektronischen Bauteil integriert sein (nicht dargestellt).

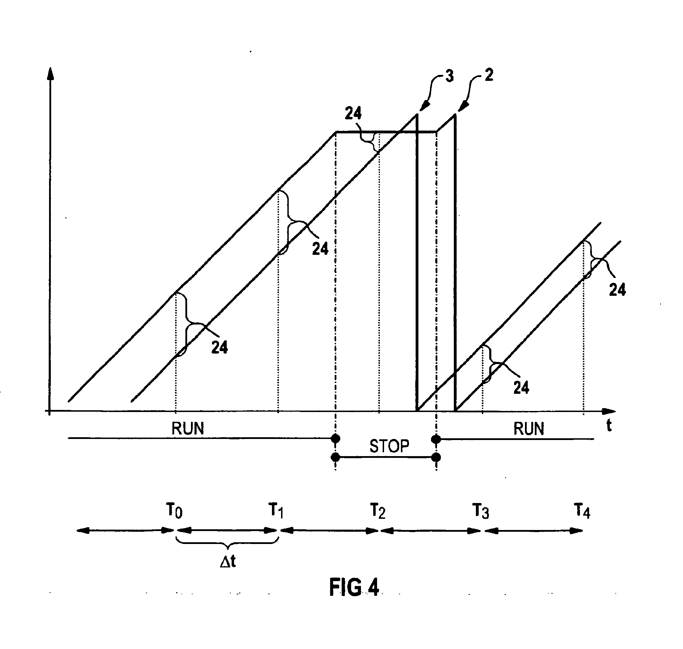

Die Figuren 4a, 4b, 4c und 4d zeigen den Verlauf der Graphen der Zähler 2, 3 vor und nach dem Unterbrechungszustand "Netz-Aus". Der Unterbrechungszustand "Netz-Aus" ist jeweils durch eine doppelte vertikale Linie dargestellt. Entsprechend ist links von der doppelten vertikalen Linie der Verlauf der Graphen der Zähler 2, 3 vor dem Unterbrechungszustand "Netz-Aus" und rechts der doppelten vertikalen Linie der weitere Verlauf der Graphen der Zähler 2, 3 nach dem Unterbrechungszustand "Netz-Aus" dargestellt.

Die Darstellung erfolgt dabei, als ob die Dauer des Unterbrechungszustandes "Netz-Aus" als Zeitspanne nicht existierte, denn für das elektrische Gerät 1 (FIG 1) existiert während eines Spannungsausfalls keine definierte Zeitbasis. Das elektrische Gerät 1 "weiß" nicht, wie lange der Zeitraum des Spannungsausfalls dauert. Ein in realer Zeit ca. eine Minute andauernder Spannungsausfall ist ohne zusätzliche Maßnahmen nicht von einem Spannungsausfall, der mehrere Tage andauert, unterscheidbar. Für eine Darstellung, die die Dauer des Unterbrechungszustandes "Netz-Aus" berücksichtigt, wäre die Darstellung in den Figuren 4a - 4d jeweils zwischen den beiden vertikalen Linien zu trennen und der rechte Teil der Graphik um eine geeignete Distanz nach rechts zu verschieben. Der Graph der Zähler 2, 3 wäre zwischen dem letzten definierten Punkt vor Eintritt des Unterbrechungszustandes "Netz-Aus" und dem ersten definierten Punkt am Ende des Unterbrechungszustandes "Netz-Aus" zu interpolieren.

FIG 4a zeigt die Verhältnisse, wenn der erste Zähler 2 während des Unterbrechungszustandes "Netz-Aus" durch die erste Zählfrequenz 4 (FIG 2) beaufschlagt bleibt, während der zweite Zähler 3 nicht mehr durch die zweite Zählfrequenz 5 (FIG 2) beaufschlagt und entsprechend angehalten wird. Die Tatsache, dass der erste Zähler 2 auch während des Unterbrechungszustandes "Netz-Aus" weiterläuft, wird durch den punktierten Pfeil angedeutet. Der angehaltene zweite Zähler 3 scheint - aufgrund der Nichtexistenz des Unterbrechungszustandes "Netz-Aus" als Zeitspanne - unverändert weiterzulaufen.

Diese Variante des elektrischen Gerätes 1 (FIG 1) ist durch das Merkmal gekennzeichnet, dass während des Unterbrechungszustandes "Netz-Aus" nur einer der beiden Zähler 2, 3 durch die jeweilige Zählfrequenz 4, 5 beaufschlagt ist. Für das elektrische Gerät 1 (FIG 1) sind dazu nicht dargestellte Mittel erforderlich, die z. B. den Stand des zweiten Zählers 3 bei Eintritt des Unterbrechungszustandes zwischenspeichern, zumindest aber das zumindest kurzfristige Weiterlaufen des ersten Zählers 2 ermöglichen.

FIG 4b zeigt die Verhältnisse, wenn der erste Zähler 2 bei Eintritt des Unterbrechungszustandes "Netz-Aus" zurückgesetzt und der zweite Zähler 3 nicht mehr durch die zweite Zählfrequenz 5 (FIG 2) beaufschlagt und entsprechend angehalten wird. Das Rücksetzen des ersten Zählers 2 wird durch den punktierten Pfeil angedeutet. Der angehaltene zweite Zähler 3 scheint - wie oben - unverändert weiterzulaufen.

Diese Variante des elektrischen Gerätes 1 (FIG 1) ist durch das Merkmal gekennzeichnet, dass der Eintritt des Unterbrechungszustandes "Netz-Aus" das Rücksetzen zumindest eines der beiden Zähler 2, 3 auf einen vorgegebenen oder vorgebbaren Initialwert 2", 3" (FIG 2) bewirkt. Für das elektrische Gerät 1 sind wiederum nicht dargestellte Mittel erforderlich, die z. B. den Stand des zweiten Zählers 3 bei Eintritt des Unterbrechungszustandes zwischenspeichern.

FIG 4c zeigt die Verhältnisse, wenn bei Eintritt des Unterbrechungszustandes "Netz-Aus" beide Zähler 2, 3 zurückgesetzt werden und der zweite Zähler 3 auch während des Unterbrechungszustandes "Netz-Aus" durch die zweite Zählfrequenz 5 beaufschlagt ist. Das Rücksetzen beider Zähler 2, 3 wird jeweils durch die punktierten Pfeile angedeutet. Da der zweite Zähler 3 auch während des Unterbrechungszustandes "Netz-Aus" weiterläuft, liegt sein Startwert nach dem Unterbrechungszustand "Netz-Aus" oberhalb des Initialwertes 3".

Diese Variante des elektrischen Gerätes 1 (FIG 1) ist durch das Merkmal gekennzeichnet, dass der Eintritt des Unterbrechungszustandes "Netz-Aus" das Rücksetzen beider Zähler 2, 3 auf einen vorgegebenen oder vorgebbaren Initialwert 2", 3" bewirkt. Für das elektrische Gerät 1 sind wiederum dargestellte Mittel erforderlich, die das zumindest kurzfristige Weiterlaufen des zweiten Zählers 3 ermöglichen.

FIG 4d zeigt schließlich die Verhältnisse, wenn bei Eintritt des Unterbrechungszustandes "Netz-Aus" beide Zähler 2, 3 zurückgesetzt werden. Das Rücksetzen beider Zähler 2, 3 wird wiederum jeweils durch die punktierten Pfeile angedeutet. Wenn beide Zähler 2, 3 auf einen gleichen Initialwert 2", 3" zurückgesetzt werden, verlaufen ihre Graphen nach dem Unterbrechungszustand "Netz-Aus" zunächst deckungsgleich.

Auch diese Variante des elektrischen Gerätes 1 (FIG 1) ist durch das Merkmal gekennzeichnet, dass der Eintritt des Unterbrechungszustandes "Netz-Aus" das Rücksetzen beider Zähler 2, 3 auf einen vorgegebenen oder vorgebbaren Initialwert 2", 3" bewirkt. Für das elektrische Gerät 1 sind keine zusätzlichen Mittel erforderlich, um das dargestellte Verhalten der beiden Zähler 2, 3 zu erreichen, denn der Ausfall der Netzspannung bewirkt das Rücksetzen der Zähler, da der den aktuellen Stand des jeweiligen Zählers 2, 3 repräsentierende Inhalt eines Zählerregisters verloren geht. In Anschluss an den Unterbrechungszustand "Netz-Aus", bei Spannungswiederkehr, beginnen beide Zähler 2, 3 ausgehend von einem Initialwert 2", 3", insbesondere dem Wert Null, erneut zu laufen, sobald sie durch ihre jeweilige Zählfrequenz 4, 5 beaufschlagt werden.

Bei allen Figuren 4a - 4d ist unmittelbar ersichtlich, dass sich sowohl bei der Steigungs- als auch bei der Abstandsuntersuchung die ermittelten Differenzen unterscheiden, wenn in dem Vergleich eine Messstelle vor dem Unterbrechungszustand "Netz-Aus" und eine Messstelle nach dem Unterbrechungszustand "Netz-Aus" berücksichtigt wird. An dieser Abweichung der Differenz ist der Unterbrechungszustand "Netz-Aus" sicher erkennbar. D. h., sobald bei einer Messstelle $M_k$ eine Differenz ermittelt wird, die nicht mit der zum Vergleich heranzuziehenden Differenz übereinstimmt, ist die Tatsache, dass ein Unterbrechungszustand "Netz-Aus" vorgelegen haben muss, erkannt und es kann z. B. ein diesbezügliches Signal 7 (FIG 1) ausgegeben werden.

Die Erkennung des Unterbrechungszustandes "Netz-Aus" gelingt allerdings dann nicht, wenn bei Eintritt des Unterbrechungszustandes "Netz-Aus" der Abstand beider Zähler 2, 3 zum jeweiligen Überlaufwert 2', 3' und der Abstand beider Zähler 2, 3 zueinander jeweils vor und nach dem Unterbrechungszustand "Netz-Aus" in einem bestimmten Verhältnis zueinander stehen.

Ein Beispiel für eine derartige Konstellation ist, dass die Überlaufwerte 2', 3' beider Zähler 2, 3 gleich groß sind ($F^{max} = S^{max}$) und die Graphen beider Zähler 2, 3 vor und nach dem Unterbrechungszustand "Netz-Aus" deckungsgleich verlaufen ($F_k = S_k$; $F_{k+1} = S_{k+1}$). Aus Beziehung [4] (s.o.) folgt dann:

$$[4] \qquad F^{max} - F_{k+1} + F_k = S^{max} - S_{k+1} + S_k \qquad | \; F^{max} = S^{max}$$

$$\Leftrightarrow \qquad F_k - F_{k+1} = S_k - S_{k+1} \qquad | \; F_k = S_k; \; F_{k+1} = S_{k+1}$$

$$\Leftrightarrow \qquad 0 = 0$$

Der Unterschied in der gebildeten Differenz vor und nach dem Unterbrechungszustand "Netz-Aus" verschwindet. Der Unterbrechungszustand "Netz-Aus" wäre bei einer solchen Konstellation nicht mehr erkennbar.

Um dies zu vermeiden ist vorgesehen, dass die Überlaufwerte 2', 3' beider Zähler 2, 3 unterschiedlich gewählt werden ($F^{max} <> S^{max}$). Damit existiert bis zum erstmaligen Überlauf der Zähler 2, 3 kein Punkt, zu dem die Zähler 2, 3 gleich weit vom jeweiligen Überlaufwert 2', 3' entfernt sind. Nach dem ersten Überlauf beider Zähler 2, 3 bildet sich ein "Versatz" zwischen den Graphen beider Zähler 2, 3 aus. Allerdings ist es auch dann noch möglich, dass sich der "Versatz" und die unterschiedlichen Überlaufwerte 2', 3' an bestimmten Punkten (Kompensationspunkt) gegenseitig aufheben, wie oben gezeigt. Die Wahrscheinlichkeit, dass ein solcher Punkt genau durch eine Messstelle getroffen wird, ist allerdings relativ gering. Je größer die Überlaufwerte 2', 3' - oder zumindest einer der Überlaufwerte 2', 3' - gewählt werden, desto unwahrscheinlicher ist es, dass eine Messstelle mit einem solchen Kompensationspunkt zusammenfällt, bei der der Unterbrechungszustand "Netz-Aus" nicht erkannt werden kann.

Die in den Figuren 2, 3a, 3b, 4a - 4d dargestellten Verhältnisse hinsichtlich einer identischen Steigung der Graphen beider Zähler 2, 3 ergeben sich auch bei unterschiedlichen Zählfrequenzen 4, 5, wenn anstelle eines Standes des jeweiligen Zählers 2, 3 ein daraus ermittelter Zeitwert dargestellt wird. Dies ist leicht dadurch möglich, dass der jeweilige Stand des Zählers 2, 3 z. B. durch die zugehörige Zählfrequenz 4, 5 dividiert wird. Bei einer ersten Zählfrequenz 4 von z. B. 1 kHz (1.000 Zählimpulse pro Sekunde) erreicht der damit beaufschlagte erste Zähler 2 nach einer Sekunde einen Stand von 1.000, nach zwei Sekunden einen Stand von 2.000, nach drei Sekunden einen Stand von 3.000, usw. Dividiert durch die Zählfrequenz 4 von 1 kHz ergibt sich damit nach einer Sekunde auch der Zeitwert von einer Sekunde (1.000 / 1 kHz), nach zwei Sekunden auch der Zeitwert von zwei Sekunden (2.000 / 1 kHz), usw. Entsprechend erreicht der durch eine Zählfrequenz 5 von z. B. 32,768 kHz beaufschlagte zweite Zähler 3 nach einer Sekunde einen Stand von 32.768, nach zwei Sekunden einen Stand von 65.536, nach drei Sekunden einen Stand von 98.304, usw. Dividiert durch die Zählfrequenz 5 von 32,768 kHz ergibt sich damit nach einer Sekunde auch der Zeitwert von einer Sekunde (32.768 / 32,768 kHz), nach zwei Sekunden auch der Zeitwert von zwei Sekunden (65.536 / 32,768 kHz), usw.

Der Zähler 2, 3 wird damit zu einem Zeitgeber 2, 3. Ein Zeitgeber wird im Allgemeinen kurz als Timer 2, 3 bezeichnet. Die Begriffe Zähler 2, 3 und Timer 2, 3 sowie Zählerstand und zugehöriger Zeitwert werden daher synonym verwendet. Der Verlauf einer zeitlichen Darstellung des jeweiligen Wertes der beiden Timer 2, 3 zeichnet sich damit durch identische, konstante Steigung aus.

Bei einer Ausführungsform des elektrischen Gerätes (FIG 1) ist vorgesehen, dass ein zu erkennender Unterbrechungszustand "Netz-Aus" durch einen Ausfall der Energieversorgung und ein weiterer, zu erkennender Unterbrechungszustand "Stop" durch eine Unterbrechung der Abarbeitung des Anwenderprogramms verursacht werden. Im Anschluss an den Unterbrechungszustand "Netz-Aus" befindet sich das Gerät 1 zumindest kurzfristig im weiteren Unterbrechungszustand "Stop", bis schließlich die Abarbeitung des Anwenderprogramms wieder aufgenommen wird.

Dabei ist vorgesehen, dass der Eintritt des Unterbrechungszustands "Netz-Aus" das Rücksetzen beider Zähler 2, 3 bewirkt. Dies entspricht der in FIG 4d dargestellten Konstellation. Ferner ist vorgesehen, dass während des weiteren Unterbrechungszustandes "Stop" nur einer der beiden Zähler 2, 3 durch die jeweilige Zählfrequenz 4, 5 beaufschlagt ist. Dies entspricht der in FIG 4a dargestellten Konstellation.

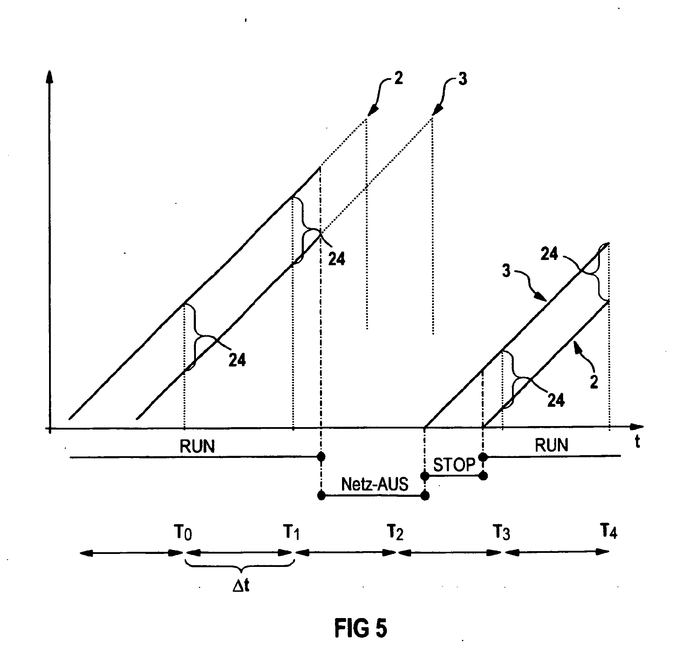

Ein exemplarischer Verlauf der Graphen beider Zähler 2, 3 bei diesem Gerät ist in FIG 5 dargestellt. Die Unterbrechungszustände sind wieder - wie in FIG 4a - 4d - durch eine vertikale doppelte Linie dargestellt.

Zunächst tritt z. B. der durch Spannungsausfall verursachte Unterbrechungszustand "Netz-Aus" ein (linke doppelte vertikale Linie). Bei Eintritt des Unterbrechungszustandes "Netz-Aus" werden beide Zähler 2, 3 auf den Initialwert Null 2", 3" zurückgesetzt (gestrichelte, abwärts auf gleichen Zielpunkt gerichtete Pfeile). Im Anschluss an den Unterbrechungszustand "Netz-Aus" befindet sich das Gerät 1 (FIG 1) zumindest kurzzeitig im weiteren Unterbrechungszustand "Stop", da das Anwenderprogramm nicht sofort nach Spannungswiederkehr gestartet wird. Im weiteren Unterbrechungszustand "Stop" ist nur der zweite Zähler 3 durch die jeweilige Zählfrequenz 5 (FIG 2) beaufschlagt (einzelner, aufwärts gerichteter, gestrichelter Pfeil).

Bei jeweils einer Messstelle $M_k$, $M_{k+1}$ vor und nach dem Unterbrechungszustand "Netz-Aus" ergibt sich eine Abweichung in den ermittelten Differenzen. Daran ist der Unterbrechungszustand "Netz-Aus" eindeutig erkennbar.

Auch wenn der räumliche Abstand der Graphen beider Zähler 2, 3 vor und nach dem Unterbrechungszustand "Netz-Aus" identisch sein sollte (wie in FIG 5 dargestellt), ergeben sich dennoch unterschiedliche Differenzen, denn wegen des durch das Rücksetzen beider Zähler 2, 3 bewirkten "Überlaufs" beider Zähler 2, 3 wird bei der Differenzenbildung eine Normierung auf den Überlaufwert 2', 3' (FIG 2) des jeweiligen Zählers durchgeführt. Damit geht der Überlaufwert 2', 3' selbst in die Differenz ein. Bei stark unterschiedlichen Überlaufwerten 2', 3' sind damit entsprechend auch die ermittelten Differenzen stark unterschiedlich, so dass der Unterbrechungszustand sicher erkennbar bleibt.

Im weiteren Verlauf des Betriebs des Gerätes 1 tritt z. B. aufgrund eines Fehlers im Anwenderprogramm der weitere Unterbrechungszustand "Stop" ein (rechte doppelte vertikale Linie). Während des weiteren Unterbrechungszustandes "Stop" ist nur der zweite Zähler 3 durch die jeweilige Zählfrequenz 5 beaufschlagt (einzelner, aufwärts gerichteter, gestrichelter Pfeil) . Bei jeweils einer Messstelle $M_{k+n}$, $M_{k+n+1}$ vor und nach dem weiteren Unterbrechungszustand "Stop" ergibt sich eine Abweichung in den ermittelten Differenzen. Daran ist auch der weitere Unterbrechungszustand "Stop" eindeutig erkennbar.

Damit lässt sich die Erfindung kurz wie folgt darstellen:

Zur Erkennung von Unterbrechungszuständen (z. B. Spannungsausfall, Programmabbruch) bei einem elektrischen Gerät, z. B. einer speicherprogrammierbaren Steuerung, sind zwei Zähler/Timer vorgesehen, die durch Spannungsausfall zurückgesetzt werden und nach Spannungswiederkehr erneut zu zählen beginnen. Bei Bildung einer Differenz unter Berücksichtigung jeweils mindestens eines Wertes der Zähler/Timer 2, 3 vor und nach Spannungsausfall werden stets die jeweiligen Überlaufwerte 2', 3' der Zähler/Timer 2, 3 berücksichtigt. Wenn diese Überlaufwerte 2', 3' selbst unterschiedlich sind, sind auch die Differenzen unterschiedlich. Daran ist die Unterbrechung zu erkennen. Für eine durch Programmabbruch verursachte Unterbrechung ist vorgesehen, dass nur einer der beiden Zähler/Timer 2, 3 weiterläuft und der andere während der Unterbrechung angehalten wird. Auch hier sind die ermittelten Differenzen bei Berücksichtigung jeweils eines Messwertes vor und nach der Unterbrechung unterschiedlich. Damit ist auch dieser Unterbrechungszustand erkennbar. Für das sichere Erkennen solcher Unterbrechungszustände werden nur zwei Zähler/Timer 2, 3 im Gegensatz zu vorher drei Zählern/Timer benötigt. Bei der bekannten Lösung mit drei Zähler/Timer war zudem der Betrieb eines Zählers/Timers auch während des Spannungsausfalls erforderlich, was nur mit einer aufwendigen eigenen Spannungsversorgung (z. B. Batteriepufferung) zu gewährleisten war.

**Patentansprüche**

1.  Elektrisches Gerät (1) mit einem Betriebszustand (RUN) und zumindest einem Unterbrechungszustand (Netz-Aus, Stop), einem durch eine erste Zählfrequenz (4) beaufschlagbaren ersten Zähler (2) und einem durch eine zweite Zählfrequenz (5) beaufschlagbaren zweiten Zähler (3) und einer Einrichtung (6) zur Gleichlauferkennung der beiden Zähler (2, 3),
    wobei beide Zähler (2, 3) während des Betriebszustandes (RUN) durch die jeweilige Zählfrequenz (4, 5) beaufschlagt sind, **dadurch gekennzeichnet,**
    **dass** der Eintritt des Unterbrechungszustandes (Netz-Aus, Stop) das Rücksetzen zumindest eines der beiden Zähler (2, 3) auf einen vorgegebenen oder vorgebbaren Initialwert bewirkt.

2.  Elektrisches Gerät nach Anspruch 1,
    wobei die Einrichtung (6) zur Gleichlauferkennung Mittel (8, 9) zur sukzessiven Ermittlung des jeweiligen Standes der beiden Zähler (2, 3) und zum Vergleich einer ersten Differenz (21; 22, 23) zwischen einem aktuellen und einem vorangehenden Stand des ersten Zählers (2) und einer zweiten Differenz (31) zwischen einem aktuellen und einem vorangehenden Stand des zweiten Zählers (3) umfasst.

3.  Elektrisches Gerät nach Anspruch 1,
    wobei die Einrichtung (6) zur Gleichlauferkennung Mittel (8, 9) zur sukzessiven Ermittlung einer Differenz (24; 25, 26) zwischen einem Stand des ersten Zählers (2) und einem Stand des zweiten Zählers (3) und Mittel zum Vergleich einer aktuellen Differenz (24; 25, 26) und einer vorangehenden Differenz (24; 25, 26) umfasst.

4.  Elektrisches Gerät nach einem der obigen Ansprüche,

wobei der Eintritt des Unterbrechungszustandes (Netz-Aus) das Rücksetzen beider Zähler (2, 3) auf einen vorgegebenen oder vorgebbaren Initialwert bewirkt.

5. Elektrisches Gerät nach Anspruch 4, wobei die Überlaufwerte beider Zähler (2, 3) unterschiedlich sind.

6. Elektrisches Gerät nach einem der Ansprüche 1 bis 5, wobei die Zähler (2, 3) durch eine identische erste und zweite Zählfrequenz (4, 5) beaufschlagt sind.

7. Elektrisches Gerät nach einem der Ansprüche 1 bis 5, mit Mitteln zur Ableitung eines ersten und zweiten Zeitwertes aus dem jeweiligen Stand des ersten und zweiten Zählers (2, 3).

8. Verfahren zum Betrieb eines elektrischen Gerätes (1) gemäß Anspruch 1 oder einem der Ansprüche 4, 5, 6 oder 7, wobei sukzessive der jeweilige Stand der beiden Zähler (2, 3) ermittelt wird, wobei eine erste Differenz (21; 22, 23) aus einem aktuellen und einem vorangehenden Stand des ersten Zählers (2) sowie eine zweite Differenz (31) aus einem aktuellen und einem vorangehenden Stand des zweiten Zählers (3) gebildet wird und wobei die erste Differenz (21; 22, 23) mit der zweiten Differenz verglichen wird.

9. Verfahren zum Betrieb eines elektrisches Gerätes (1) gemäß Anspruch 1 oder einem der Ansprüche 4, 5, 6 oder 7, wobei sukzessive anhand des jeweiligen Standes der beiden Zähler (2, 3) eine Differenz (24; 25, 26) zwischen dem Stand des ersten Zählers (2) und dem Stand des zweiten Zählers (3) ermittelt wird und wobei eine aktuelle Differenz (24; 25, 26) mit einer vorangehenden Differenz (24; 25, 26) verglichen wird.

10. Betriebsverfahren nach Anspruch 8 oder 9, wobei aus dem jeweiligen Stand des ersten und zweiten Zählers (2, 3) ein Zeitwert abgeleitet wird.

**Claims**

1. Electrical apparatus (1) with an operational state (RUN) and at least one interrupted state (power off, stop), a first counter (2) to which a first count frequency (4) can be applied and a second counter (3) to which a second count frequency (5) can be applied and a device (6) for detecting synchronisation between the two counters (2, 3), with the two counters (2, 3) having the respective count frequency (4, 5) applied to them during the operational state (RUN), **characterised in that**
the onset of the interrupted state (power off, stop) causes the resetting of at least one of the two counters (2, 3) to a predetermined or predeterminable initial value.

2. Electrical apparatus according to claim 1,
with the device (6) for detecting synchronisation having means (8, 9) for successively determining the respective state of the two counters (2, 3) and for comparing a first difference (21; 22, 23) between a current and a preceding state of the first counter (2) and a second difference (31) between a current and a preceding state of the second counter (3).

3. Electrical apparatus according to claim 1,
with the device (6) for detecting synchronisation having means (8, 9) for successively determining a difference (24; 25, 26) between a state of the first counter (2) and a state of the second counter (3) and means for comparing a current difference (24; 25, 26) and a preceding difference (24; 25, 26).

4. Electrical apparatus according to one of the above claims, with the onset of the interrupted state (power off) causing the two counters (2, 3) to be reset to a predetermined or predeterminable initial value.

5. Electrical apparatus according to claim 4, with the overflow values of the two counters (2, 3) being different.

6. Electrical apparatus according to one of claims 1 to 5, with an identical first and second count frequency (4, 5) being applied to the counters (2, 3).

7. Electrical apparatus according to one of claims 1 to 5, with means for deriving a first and second time value from the respective state of the first and second counter (2, 3).

8. Method for operating an electrical apparatus (1) according to claim 1 or one of claims 4, 5, 6 or 7, with the respective state of the two counters (2, 3) being determined successively, with the first difference (21; 22, 23) being formed from a current state and a preceding state of the first counter (2) and also a second difference (31) from a current state and a preceding state of the second counter (3) and with the first difference (21; 22, 23) being compared with the second difference.

9. Method for operating an electrical apparatus (1) according to claim 1 or one of claims 4, 5, 6 or 7, with a difference between the state of the first counter (2) and the state of the second counter (3) being successively determined on the basis of the respective state of the two counters (2, 3) and with a current difference (24; 25, 26) being compared with a preceding difference (24; 25, 26).

10. Operational method according to claim 8 or 9, with a time value being derived from the respective state of the first and second counter (2, 3).

**Revendications**

1. Appareil (1) électrique ayant un état ( RUN ) de fonctionnement et au moins un état (Netz-Aus, Stop ) d'interruption, un premier compteur ( 2 ), qui peut être alimenté par une première fréquence ( 4 ) de comptage, et un deuxième compteur ( 3 ), qui peut être alimenté par une deuxième fréquence ( 5 ) de comptage, et un dispositif ( 6 ) de détection de la synchronisation des deux compteurs (2, 3), dans lequel les deux compteurs ( 2, 3 ) sont alimentés pendant l'état ( RUN ) de fonctionnement par la fréquence ( 4, 5 ) respective de comptage,
**caractérisé**
**en ce que** l'entrée dans l'état (Netz-Aus, Stop ) d'interruption provoque la remise d'au moins l'un des deux compteurs ( 2, 3 ) à une valeur initiale prescrite ou pouvant l'être.

2. Appareil électrique suivant la revendication 1,
dans lequel le dispositif (6) de détection de la synchronisation comprend des moyens ( 8, 9 ), pour la détermination successive de l'état respectif des deux compteurs ( 2, 3 ) et pour la comparaison d'une première différence ( 21 ; 22, 23 ) entre un état instantané et un état précédent du premier compteur (2) et d'une deuxième différence ( 31 ) entre un état instantané et un état précédent du deuxième compteur ( 3 ).

3. Appareil électrique suivant la revendication 1,
dans lequel le dispositif (6) de détection de la synchronisation comprend des moyens (8, 9) pour la détermination successive d'une différence (24 ; 25, 26 ) entre un état du premier compteur ( 2 ) et un état du deuxième compteur ( 3 ), et des moyens pour la comparaison d'une différence (24 ; 25, 26) instantanée et d'une différence ( 24 ; 25, 26 ) précédente.

4. Appareil électrique suivant l'une des revendications ci-dessus,
dans lequel l'entrée dans l'état (Netz-Aus) d'interruption provoque la remise des deux compteurs (2, 3) à une valeur initiale prescrite ou pouvant l'être.

5. Appareil électrique suivant la revendication 4,
dans lequel les valeurs de dépassement de capacité des deux compteurs ( 2, 3 ) sont différentes.

6. Appareil électrique suivant l'une des revendications 1 à 5,
dans lequel les compteurs ( 2, 3) sont alimentés par une première et par une deuxième fréquence ( 4, 5 ) de comptage identiques.

7. Appareil électrique suivant l'une des revendications 1 à 5,
comprenant des moyens de dérivation d'une première et d'une deuxième valeurs de temps à partir de l'état respectif du premier et du deuxième compteurs ( 2, 3 ).

8. Procédé pour faire fonctionner un appareil ( 1 ) électrique suivant la revendication 1 ou suivant l'une des revendications 4, 5, 6 ou 7, dans lequel on détermine successivement l'état respectif des deux compteurs ( 2, 3 ), une première différence ( 21 ; 22, 23 ) entre un état instantané et un état précédent du premier compteur (2) ainsi qu'une deuxième différence ( 31 ) entre un état instantané et un état précédent du deuxième compteur (3) étant formées et la première différence (21 ; 22, 23 ) étant comparée à la deuxième différence.

**9.** Procédé pour faire fonctionner un appareil ( 1 ) électrique suivant la revendication 1 ou suivant l'une des revendications 4, 5, 6 ou 7, dans lequel on détermine successivement au moyen de l'état respectif des deux compteurs ( 2, 3 ) une différence (24 ; 25, 26 ) entre l'état du premier compteur (2) et l'état du deuxième compteur ( 3 ) et dans lequel on compare une différence ( 24 ; 25, 26) instantanée à une différence ( 24 ; 25, 26 ) précédente.

**10.** Procédé suivant la revendication 8 ou 9, dans lequel on déduit une valeur de temps à partir de l'état respectif du premier et du deuxième compteurs ( 2, 3 ).

**FIG 1**

**FIG 2**

FIG 3a

FIG 3b

FIG 4

**FIG 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2131206 A